# EUROPÄISCHE PATENTSCHRIFT

(11) **EP 2 805 410 B1**
(45) Veröffentlichungstag und Bekanntmachung des Hinweises auf die Patenterteilung: **06.01.2016**
(21) Anmeldenummer: 13707623.8
(22) Anmeldetag: 05.03.2013
(51) Int. Cl.: H02P 23/04, F16F 15/10, F16F 15/18

(54) **VERMEIDUNG VON DAUERBETRIEB IN FREQUENZUMRICHTERERREGTEN TORSIONSRESONANZEN EINES VERDICHTERSTRANGS**
AVOIDANCE OF CONTINUOUS OPERATION IN FREQUENCY CONVERTER-STIMULATED TORSION RESONANCES OF A COMPRESSOR TRAIN
PROCÉDÉ DE COMMANDE D'UNE LIGNE DE COMPRESSEUR ÉVITANT DE FONCTIONNER EN PERMANENCE DANS LA PLAGE DE RÉSONANCE DE TORSION GÉNÉRÉE PAR UN CONVERTISSEUR DE FRÉQUENCE

(30) Priorität: 05.03.2012 DE 102012203426
(43) Veröffentlichungstag der Anmeldung: 26.11.2014
(73) Patentinhaber: Siemens Aktiengesellschaft, 80333 München (DE)
(72) Erfinder: HÜTTEN, Volker, 47447 Moers (DE)
(86) Internationale Anmeldenummer: PCT/EP2013/054311
(87) Internationale Veröffentlichungsnummer: WO 2013/131865

(56) Entgegenhaltungen:
- EP-A2- 2 194 290
- WO-A2-2011/117183
- DE-A1-102006 025 366

## Beschreibung

Die Erfindung betrifft ein Verfahren zur Steuerung einer Drehzahl eines unter Verwendung einer Antriebseinheit mit veränderlicher Drehzahl antreibbaren Verdichterstrangs sowie eine Anordnung zur Steuerung einer Drehzahl eines unter Verwendung einer Antriebseinheit mit veränderlicher Drehzahl antreibbaren Verdichterstrangs.

Weiter betrifft die Erfindung einen Verdichterstrang mit einer den Verdichterstrang mit veränderlicher Drehzahl antreibbaren, frequenzumrichtergeführten Antriebseinheit und einem die Antriebseinheit führenden Frequenzumrichter.

Verdichter bzw. Fluide komprimierende Vorrichtungen werden in verschiedenen Industriebereichen für verschiedene Anwendungen genutzt, bei denen es um eine Kompression oder Verdichtung von Fluiden, im Speziellen (Prozess-)Gasen, geht.

Bekannte Beispiele hierfür sind Turboverdichter in mobilen industriellen Anwendungen, wie in Abgasturboladern oder in Strahltriebwerken, oder auch in stationären industriellen Anwendungen, wie Getriebe- bzw. Getriebeturboverdichter für chemische oder petrochemische Anlagen, beispielsweise zur Luftzerlegung oder Ergasverflüssigung.

Bei einem solchen - in seiner Arbeitsweise kontinuierlich arbeitenden - Turboverdichter wird die Druckerhöhung (Verdichtung) des Fluids dadurch bewirkt, dass ein Drehimpuls des Fluids von Eintritt zu Austritt durch ein rotierendes, radial erstreckende Schaufeln aufweisendes Laufrad des Turboverdichters durch die Rotation von den Schaufeln erhöht wird. Hier, d.h. in einer solchen Verdichterstufe, steigen Druck und Temperatur des Fluids, während die relative (Strömungs-)Geschwindigkeit des Fluids im Laufrad bzw. Turbolaufrad sinkt.

Um eine möglichst hohe Druckerhöhung bzw. Verdichtung des Fluids zu erreichen, können mehrere solcher Verdichterstufen hintereinander geschaltet werden.

Als bekannte Bauformen von Turboverdichtern unterscheidet man zwischen Radial-, Axial- und kombinierten Axial-Radialverdichtern bzw. zwischen Ein-Wellen- und Getriebeverdichtern.

Bei dem Axialverdichter strömt das zu komprimierende Fluid, beispielsweise ein Prozessgas, in paralleler Richtung zur Achse (Axialrichtung) durch den Verdichter. Bei dem Radialverdichter strömt das Gas axial in das Laufrad der Verdichterstufe und wird dann nach außen (radial, Radialrichtung) abgelenkt. Bei mehrstufigen Radialverdichtern wird damit hinter jeder Stufe eine Strömungsumlenkung notwendig.

Kombinierte Bauarten von Axial- und Radialverdichtern saugen mit ihren Axialstufen große Volumenströme an, die in den anschließenden Radialstufen auf hohe Drücke komprimiert werden.

Während meist einwellige Maschinen (Ein-Wellen-Turboverdichter), bei denen eine oder mehrere Verdichterstufen auf bzw. über ein und derselbe Welle realisiert ist bzw. sind, zum Einsatz kommen, sind bei (mehrstufigen) Getriebeturboverdichtern (kurz im Folgenden auch nur Getriebeverdichter) die einzelnen Verdichterstufen um ein Großrad herum gruppiert, wobei mehrere parallele (Ritzel-)Wellen, die jeweils ein oder zwei - in als Gehäuseanbauten realisierte Spiralgehäusen aufgenommene - Laufräder (an freien Wellenenden der Ritzelwellen angeordnete Turbolaufräder) tragen, von einem großen, im Gehäuse gelagerten Antriebszahnrad, einem Großrad, angetrieben werden.

Ein Antrieb eines Verdichters erfolgt in der Regel mittels einer mit dem Verdichter mechanisch bzw. ein Drehmoment übertragbar gekoppelte Antriebseinheit, beispielsweise eines (Elektro-)Motor oder einer Turbine. Deren Abtrieb bzw. Abtriebswelle ist mittelbar, beispielsweise unter Dazwischenschaltung eines Getriebes oder einer Kupplung, oder unmittelbar, beispielsweise durch eine gemeinsame Abtriebs-/Antriebswelle, mit der Antriebswelle des Verdichters verbunden.

Dieses mechanische Antrieb-/Abtriebssystem des Verdichters, d.h. die gesamte mechanische, das Drehmoment übertragende Kette aus, beispielweise Abtriebswelle(-n), Kupplung(-en), (Zwischen-)Getriebe(-n), Abtriebswelle(-n), beim Verdichter wird dabei als Verdichterstrang bezeichnet.

Es ist bekannt, mit verschiedenen Methoden der Verdichterausführung und Betriebsweise, wie z.B. Drosselung, Verstellung von Eintrittleitgittern bzw. Verstellung von Betriebsdrehzahlen, ein regelbares Verdichterkennfeld zu erzeugen.

Hierbei kommen Verdichterstränge antreibende, umrichtergeführte Elektromotoren zum Einsatz, um einen Betriebsdrehzahlbereich der Anlage bzw. des Verdichters (Leistungsbereich der Anlage) zu ermöglichen bzw. das Drehzahl- bzw. Verdichterkennfeld zu erzeugen.

Dabei erfolgt eine - beispielsweise für eine geforderte Leistungsänderung bzw. -steigerung des Verdichters bzw. Verdichterstrangs erforderliche - Drehzahländerung im Verdichterstrang durch entsprechende Ansteuerung der den Verdichterstrang antreibenden Elektromotoren mittels elektronischer Frequenzumrichter (im Folgenden nur kurz Frequenzumrichter oder nur Umrichter).

Frequenzumrichter sind ebenfalls bekannt. Ein Frequenzumrichter ist z.B. ein Stromrichter der aus einem Wechselstrom (sowohl Einphasenwechselstrom als auch Dreiphasenwechselstrom) mit bestimmter Frequenz eine in Amplitude und Frequenz veränderbare Spannung generiert. Mit dieser umgerichteten Spannung wird dann ein Verbraucher, in der Regel ein Drehstrommotor, betrieben.

Durch eine zweimalige Umwandlung eines elektrischen Stroms bzw. einer elektrischen Spannung von dem Wechselstrom auf einer Netzseite, zu dem Gleichstrom innerhalb des Umrichters und schließlich zu einem Wechselstrom auf Seite des Elektromotors werden zusätzlich zu einer Speisefrequenz des Elektromotors auch torsionsanregende Frequenzanteile generiert.

Diese anregende Frequenzanteile, überwiegend harmonische und interharmonische Anregungen, können Torsionsresonanzen im Verdichterstrang, d.h. in Bauteilen und/oder Komponenten des mechanischen Antriebssystems bzw. im Verdichterstrang, verursachen.

Diese Torsionsresonanzen führen zu Schwingungen in den Bauteilen bzw. Komponenten des Verdichterstrangs, insbesondere zu Torsionsschwingungen in Wellen und/oder Radialschwingungen in Zwischengetrieben.

Infolge solcher Torsionsschwingungen bzw. Radialschwingungen mit infolge entsprechender hohen Bauteilbelastungen kann es zu Bauteilversagen bei den Bauteilen der Verdichterstränge kommen.

Ausbau und Ersatz bzw. Reparatur der beschädigten Bauteile des Verdichterstrangs sowie erforderliche Stillstandszeiten der Anlagen erzeugen hohen Kosten.

Aus der WO2011117183 ist ein Verfahren zur Steuerung einer Drehzahl eines unter Verwendung einer Antriebseinheit mit veränderlicher Drehzahl antreibbaren Verdichterstrangs bekannt, bei dem ein eine dynamische Torsionsbelastung im Verdichterstrang beschreibender Belastungswert bei einer aktuellen Drehzahl des durch die Antriebseinheit angetriebenen Verdichterstrangs ermittelt wird, indem ein dynamisches Torsionsmoment im Verdichterstrang oder eine dynamische relative Wellenschwingung im Verdichterstrang bei der aktuellen Drehzahl ermittelt wird.

EP2194290 erwähnt Torsionsschwingungen im Antriebsstrang eines Verdichters und wie man sie messen und durch Gegenmomente reduzieren kann.

DE102006025366 erwähnt das Ausregeln über den Umrichter und empfiehlt das Ändern von Regler- und Filterparametern, um Resonanzen durch den Drehzahlregler zu vermeiden.

Somit liegt der Erfindung die Aufgabe zugrunde, einen Verdichterstrang vorzusehen, welcher die Nachteile im Stand der Technik überwindet. Insbesondere liegt der Erfindung die Aufgabe zugrunde, Bauteilsbeschädigungen und -ausfälle bei Verdichtersträngen zu verhindern bzw. zu vermindern.

Die Aufgabe wird durch ein Verfahren zur Steuerung einer Drehzahl eines unter Verwendung einer Antriebseinheit mit veränderlicher Drehzahl antreibbaren Verdichterstrangs, einer Anordnung zur Steuerung einer Drehzahl eines unter Verwendung einer Antriebseinheit mit veränderlicher Drehzahl antreibbaren Verdichterstrangs sowie einem Verdichterstrang mit den Merkmalen gemäß dem jeweils unabhängigen Patentanspruch gelöst.

Bei dem Verfahren wird ein eine dynamische Torsionsbelastung im Verdichterstrang beschreibender Belastungswert bei einer aktuellen Drehzahl des durch die Antriebseinheit angetriebenen Verdichterstrangs ermittelt.

Dabei sei unter "ermittelt" jegliche Art einer - direkten oder indirekten - Ermittlung, Erfassung oder Messung des die dynamische Torsionsbelastung im Verdichterstrang beschreibenden Belastungswerts zu verstehen.

Der Belastungswert wird mit einem vorgegebenen Grenzwert verglichen und, wenn der Belastungswert bezüglich des vorgegebenen Grenzwertes eine vorgegebene Bedingung erfüllt, wird die aktuelle Drehzahl im Verdichterstrang unter Verwendung der Antriebseinheit verändert.

Die Anordnung weist eine Ermittlungseinrichtung sowie eine Steuerungseinheit auf.

Die Ermittlungseinrichtung ist derart eingerichtet, dass der die dynamische Torsionsbelastung im Verdichterstrang beschreibende Belastungswert bei einer aktuellen Drehzahl des durch die Antriebseinheit angetriebenen Verdichterstrangs ermittelbar ist.

Die Steuerungseinheit ist derart eingerichtet, dass der Belastungswert mit dem vorgegebenen Grenzwert vergleichbar und, wenn der Belastungswert bezüglich des vorgegebenen Grenzwertes die vorgegebene Bedingung erfüllt, die Antriebseinheit zu der Änderung der aktuelle Drehzahl im Verdichterstrang ansteuerbar ist.

Der Verdichterstrang weist eine den Verdichterstrang mit veränderlicher Drehzahl antreibbare, frequenzumrichtergeführte Antriebseinheit, einen die Antriebseinheit führenden Frequenzumrichter sowie die Anordnung auf.

Vereinfacht ausgerückt, die Erfindung beruht auf einer Überwachung bzw. ermittlungs-/messtechnischen Überwachung der dynamischen Torsionsbelastung im Verdichterstrang.

Dazu wird eine die dynamische Torsionsbelastung im Verdichterstrang repräsentierende Belastungsgröße, d.h. der Belastungswert, wie insbesondere ein dynamisches Torsionsmoment im Verdichterstrang, eine dynamische Wellendrehzahl im Verdichterstrang, eine dynamische relative Wellenschwingung im Verdichterstrang oder ein dynamischer drehmomentbildender Strom der Antriebseinheit, ermittelt bzw. gemessen.

Das dynamische Torsionsmoment im Verdichterstrang - oder die andere die dynamische Torsionsbelastung repräsentierende Belastungsgröße, wie die dynamische Wellendrehzahl im Verdichterstrang, die dynamische relative Wellenschwingung im Verdichterstrang oder den dynamischen drehmomentbildenden Strom der Antriebseinheit, wird mit einer vorher zu definierenden, zulässigen Grenzbelastung bzw. Grenzwert, meist eine Maximalbelastung bzw. ein Maximalwert, verglichen.

Sollte, wie im Fall einer Torsionsresonanzbedingung im Verdichterstrang bei entsprechender Festlegung des Grenzwerts entsprechend vorsehbar, der Wert der Maximalbelastung bzw. der Maximalwert überschritten sein, ist unter Verwendung der Antriebseinheit ein Betrieb des Verdichterstranges auf eine niedrigere bzw. höhere Drehzahl zu ändern. Der Verdichter bzw. der Verdichterstrang wird aus der Resonanz "herausgefahren".

Typischerweise wird man den Betriebspunkt des Verdichters bzw. des Verdichterstrangs auf eine höhere Drehzahl verlagern, da damit sichergestellt ist, die Anforderungen des Verdichter- bzw. Anlagenprozesses zu erreichen.

Da Torsionsresonanzen im Verdichterstrang typischerweise schwach gedämpft sind, ist meist nur eine geringe Drehzahländerung notwendig, um den Betriebspunkt des Verdichters aus dem Resonanzbereich zu verschieben bzw. herauszufahren.

Anschaulich gesehen, wird bzw. werden somit bei der Erfindung bei einem spezifischen Verdichterstrang durch dortiger Ermittlung bzw. Messung der dynamischen Torsionsbelastung derjenige bzw. diejenigen Drehzahlbereiche, in welchem bzw. welchen eine bzw. die Torsionsresonanzen - mit entsprechend hohen (relevanten) Torsionsamplituden - bei dem Verdichterstrang auftritt bzw. auftreten, identifiziert.

Dieser Drehzahlbereich bzw. diese Drehzahlbereiche können dann für einen stationären und/oder dauerhaften Betrieb des Verdichterstrangs gesperrt bzw. auf ein notwendiges Minimum reduziert werden. D.h., entsprechende Drehzahlbereiche bzw. Drehzahlbänder in einem Verdichterkennfeld des Verdichterstrangs werden für einen stationären Betrieb bzw. Dauerbetrieb des Verdichterstrangs gesperrt.

Unter dauerhaft bzw. dauerhaften Betrieb/Betriebszustand kann dabei ein für eine vorgebbare Zeitspanne eingenommener und für diese Zeitspanne angehaltener bzw. anhaltender (Betriebs)Zustand verstanden werden. Diese Zeitspanne überschreitet dabei in der Regel eine Zeitdauer von einer oder wenigen Sekunden.

Damit vermindert oder verhindert die Erfindung - durch die Vermeidung von Torsionsresonanzen mit entsprechend hohen bzw. relevanten dynamischen Torsionsamplituden und damit durch die Reduzierung von Bauteilbelastungen im Verdichterstrang - belastungsbedingte Bauteilschäden am/im Verdichterstrang und ermöglicht dadurch einen zuverlässigen, ausfallsicheren und lebensdauerlängeren Betrieb des Verdichterstrangs bzw. der Verdichters.

Ein weiterer besonderer Vorteil der Erfindung liegt darin, dass die Auswahl aus Umrichter, Elektromotor und Strangkonfiguration ohne besondere Einschränkung getroffen werden kann.

Ein Betrieb des Verdichters bzw. des Verdichterstrangs in Torsionsresonanzzuständen mit nicht-dauerhaft übertragbaren dynamischen Torsionsmomenten wird hierdurch vermieden.

Zusätzlich wird der zusperrende Dauerbetriebesdrehzahlbereich auf ein Minimum reduziert.

Somit sind auch die Auswirkungen bzw. Einschränkungen für den Anlagenbetrieb und auch der Leistungsmehrbedarf des Verdichters ebenfalls auf ein Minimum reduziert.

Auch weitere Einflussgrößen, wie z.B. Netzfrequenzschwankungen, leistungsabhängige Resonanzamplituden, Veränderungen der Torsionseigenfrequenzen usw., werden durch diese Erfindung berücksichtigt.

Bevorzugte Weiterbildungen der Erfindung ergeben sich auch aus den abhängigen Ansprüchen. Die Weiterbildungen beziehen sich sowohl auf das erfindungsgemäße Verfahren, auf die erfindungsgemäße Anordnung wie auch auf den erfindungsgemäßen Verdichterstrang.

Die Erfindung und die beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer beschriebenen Weiterbildung möglich durch ein computerlesbares Speichermedium, auf welchem ein Computerprogramm gespeichert ist, welches die Erfindung oder die Weiterbildung ausführt. Auch können die Erfindung und/oder jede beschriebene Weiterbildung durch ein Computerprogrammerzeugnis realisiert sein, welches ein Speichermedium aufweist, auf welchem ein Computerprogramm gespeichert ist, welches die Erfindung und/oder die Weiterbildung ausführt.

Bei einer bevorzugten Weiterbildung ist der Belastungswert das dynamische Torsionsmoment im Verdichterstrang.

D.h., bevorzugt wird das dynamische Torsionsmoment im Verdichterstrang bzw. an einem Bauteil, insbesondere an einer Welle oder einer Kupplung, des Verdichterstrangs gemessen. Torsionsmessungen an Wellen oder Kupplungen sind einfach und kostengünstig zu realisieren.

Besonderes bevorzugt ist hier dann die Ermittlungseinrichtung eine Messeinrichtung auf Basis einer Dehnungsmessstreifentechnologie (DMS-Technologie).

D.h., besonders bevorzugt erfolgt die Messung des dynamischen Torsionsmoments mittels der DMS-Technologie. Diese DMS-Technologie ist vielfach erprobt, insbesondere für dynamische Belastungen geeignet, ausgereift, zuverlässig und einfach und kostengünstig zu realisieren.

Insbesondere können Dehnmessstreifen, d.h. im Allgemeinen die Ermittlungseinheit zur Ermittlung des Belastungswerts, auf einer Welle oder Kupplung des Verdichterstrangs aufgebracht werden, mittels deren das Torsionsmoment, d.h. im Allgemeinen der Belastungswert, und damit die dynamische Torsionsbelastung im Verdichterstrang messbar ist. Eine Kupplung eignet sich deshalb besonders, da dort der Ort der höchsten Verdrehung im Verdichterstrang ist.

Als der Belastungswert kann auch die dynamische Wellendrehzahl im Verdichterstrang, die dynamische relative Wellenschwingung im Verdichterstrang oder der dynamische drehmomentbildende Strom der Antriebseinheit verwendet werden. Auch diese Größen geben die dynamische Torsionsbelastung im Verdichterstrang sehr gut wieder.

Bei einer weiteren bevorzugten Weiterbildung wird, wenn der Belastungswert bezüglich des vorgegebenen Grenzwertes eine vorgegebene Bedingung erfüllt, die aktuelle Drehzahl im Verdichterstrang erhöht. Dadurch kann gewährleistet werden, dass der Verdichter die Anforderungen des Verdichtungsprozesses, d.h. des Anlagenprozesses, erfüllt.

Der vorgegebene Grenzwert kann ein oberer Grenzwert, beispielsweise ein maximales dynamisches Torsionsmoment, und die vorgegebene Bedingung ein Erreichen oder Überschreiten des oberen Grenzwertes sein.

Auch kann der vorgegebene Grenzwert ein unterer Grenzwert, wie ein minimales dynamisches Torsionsmoment, und die vorgegebene Bedingung ein Erreichen oder Unterschreiten des unteren Grenzwertes sein.

Bevorzugt wird der Grenzwert unter Verwendung eines maximalen, dynamisch übertragbaren Drehmoments ermittelt bzw. festgelegt. Übliche Sicherheiten können dabei berücksichtigt und/oder Sicherheitsfaktoren können entsprechend bei dem Grenzwert eingerechnet werden.

Auch kann der Grenzwert unter Verwendung eines Nenndrehmoments festgelegt werden. Auch hier können Sicherheiten bzw. Sicherheitsfaktoren mitberücksichtigt werden.

Weiterhin kann der Grenzwert auch unter Verwendung einer vorgebbaren zulässigen Abweichung, beispielsweise durch Angabe einer prozentualen Abweichung, wie +/-5%, +/-10% oder +/-15%, von einem Bezugswert, wie einem aktuellen Antriebsmoment oder Nenndrehmoment, festgelegt werden.

Der Grenzwert kann ein Absolutwert oder auch Relativwert bezüglich eines Bezugswerts, wie dem aktuellen Antriebsmoment oder dem Nenndrehmoment, sein.

Bei einer besonders bevorzugten Weiterbildung wird ein oberer und unterer Grenzwert festgelegt, mit deren beiden der Belastungswert jeweils verglichen wird. Anschaulich gesehen kann hier somit ein zulässiger Schwankungsbereich für den Belastungswert "aufgespannt" werden, so dass bei einem "Herauslaufen" des Belastungswerts aus dem zulässigen Schwankungsbereich eine Torsionsresonanz identifiziert - und die Drehzahländerung durchgeführt wird.

Ein solcher zulässiger Schwankungsbereich kann dabei "statisch" sein, d.h. unabhängig von einem Betriebszustand des Verdichterstrang werden hier der obere und untere Grenzwert festgelegt. Auch kann ein solcher zulässiger Schwankungsbereich "dynamisch" sein, d.h. abhängig von einem Betriebszustand des Verdichterstrangs ändert sich der obere und untere Grenzwert. Anschaulich ausgedrückt entsteht hier ein Band - mit einer oberen und unteren Grenze -, innerhalb dessen sich zulässige Belastungswerte befinden. Liegt ein belastungswert außerhalb des Bandes wird eine Torsionsresonanz identifiziert.

Bei einer weiteren bevorzugten Weiterbildung wird die Drehzahl unter Verwendung eines frequenzumrichtergeführten Elektromotors verändert. Der - den Verdichterstrang hier antreibende - Elektromotor kann insbesondere unter Verwendung eines Frequenzumrichters zur Veränderung der Drehzahl (an- )gesteuert werden.

Besonders bevorzugt wird das Verfahren - mit den erfindungsgemäßen Schritten "Ermitteln", "Vergleichen" und gegebenenfalls "Drehzahl ändern" - bei einer Mehrzahl aufeinander folgender Zeitpunkte, beispielsweise in einer Betriebsphase des Verdichterstrangs, wie bei einem Anfahren oder einem Durchfahren einer Leistungsrampe, durchgeführt.

Hierdurch kann die Erfindung zur Überwachung von Betriebszuständen des Verdichterstrangs, insbesondere zu einer Vermeidung eines Dauerbetriebszustands des Verdichterstrangs in einer Torsionsresonanz des Verdichterstrangs, eingesetzt werden.

Im Speziellen kann die Erfindung zur Vermeidung eines Dauerbetriebs in einer frequenzumrichtererregten Torsionsresonanz des Verdichterstrangs eingesetzt werden. Hier erfolgt der - Drehzahl veränderliche - Antrieb des Verdichterstrangs mittels eines frequenzumrichtergeführten Elektromotors, dessen Frequenzumrichter torsionsanregende Frequenzanteile generiert, die dann die Torsionsresonanzen im Verdichterstrang verursachen können.

Durch die Erfindung wird dann hier die dynamische Torsionsbelastung im Verdichterstrang überwacht, eine solche frequenzumrichtererregte Torsionsresonanz im Verdichterstrang identifiziert - und der Verdichterstrang dann aus der Resonanz herausgefahren. Auch kann dann eine der identifizierten frequenzumrichtererregten Torsionsresonanz entsprechende Drehzahl (Resonanzdrehzahl) oder ein entsprechender Drehzahlbereich (festlegbarer Bereich um die Resonanzdrehzahl) für den Dauerbetrieb gesperrt werden.

Nach einer bevorzugten Weiterbildung weist ein Turboverdichter, insbesondere ein Ein-Wellen-Turboverdichter oder ein Getriebeturboverdichter, den Verdichterstrang auf, so dass durch die Erfindung dann der Turboverdichter bzw. der Betrieb des Turboverdichters überwacht bzw. - bei Vermeidung eines Dauerbetriebs in der Torsionsresonanz - entsprechend gesteuert werden kann.

Auch kann die Erfindung eingesetzt werden bei einer großtechnischen Anlage, insbesondere bei einer chemischen oder petrochemischen Anlage, wie einer Anlage zu einer Luftzerlegung oder einer Anlage zu einer (Erdgas-)Verflüssigung, welche dann den Verdichterstrang aufweist.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Insbesondere sind diese Merkmale jeweils einzeln und in beliebiger geeigneter Kombination mit dem erfindungsgemäßen Verfahren, der Anordnung und/oder des Verdichterstrangs gemäß dem jeweiligen unabhängigen Anspruch kombinierbar.

In Figuren ist ein Ausführungsbeispiel der Erfindung dargestellt, welches im Weiteren näher erläutert wird.

Es zeigen
- FIG 1: eine schematische Darstellung einer Verdichteranlage mit einem mittels eines umrichtergeführten Elektromotors angetriebenen Verdichterstrang gemäß einem Ausführungsbeispiel;
- FIG 2: ein Diagramm mit Betriebszuständen BZ und gemessenen Belastungen des Verdichterstrangs bei einer Leistungsrampe gemäß dem Ausführungsbeispiel;
- FIG 3: ein Verdichterkennfeld mit gesperrten Drehzahlbändern von regelungstechnisch zu vermeidenden Dauerbetriebsdrehzahlbereichen gemäß dem Ausführungsbeispiel;
- FIG 4: Verfahren zur Steuerung der Drehzahl des Verdichterstrangs gemäß dem Ausführungsbeispiel.

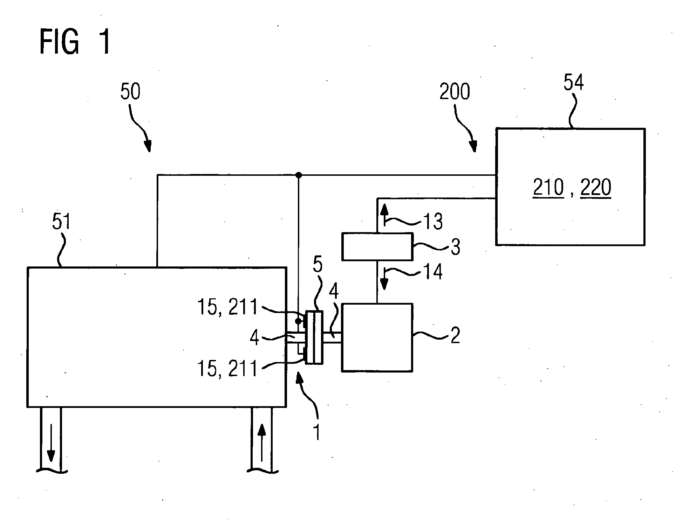

Ausführungsbeispiel: Vermeidung von Dauerbetrieb in frequenzumrichtererregten Torsionsresonanzen eines Verdichterstrangs (FIG 1 - FIG 4)

FIG 1 zeigt - schematisch - eine Verdichteranlage 50, beispielsweise zu einer Ergasverflüssigung, mit einem Verdichterstrang 1 mit einem Ein-Wellen-Turboverdichter 51, kurz nur Verdichter 51.

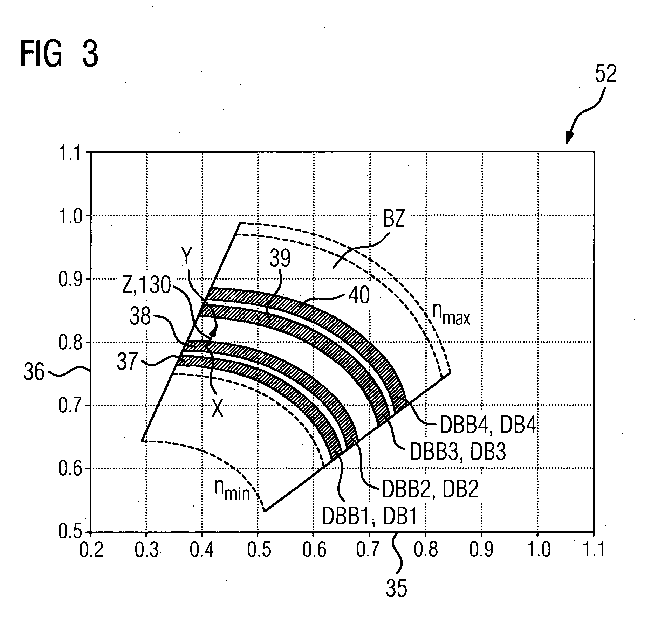

Bei dem Verdichterstrang 1 kommt ein - diesen Verdichterstrang 1 mit veränderbarer Drehzahl 6 antreibender - umrichtergeführter Elektromotor 2 zum Einsatz, um einen Betriebsdrehzahlbereich der Verdichteranlage 50 bzw. des Verdichters 51 (Leistungsbereich der Anlage 50, vgl. FIG 3 Verdichterkennfeld 52) zu ermöglichen.

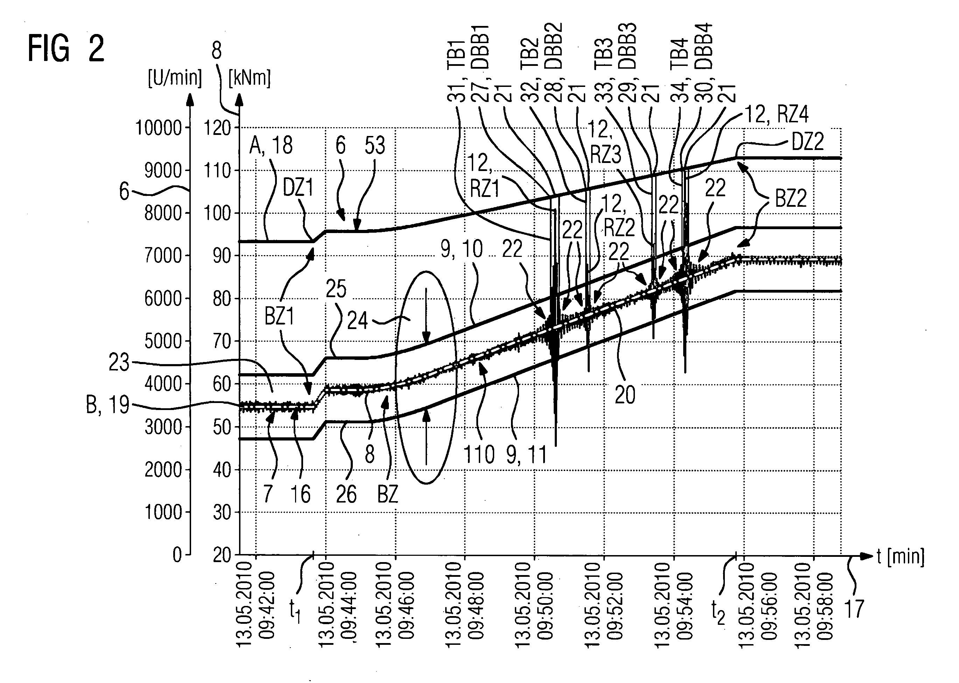

Hierbei erfolgt eine - beispielsweise für eine geforderte Leistungsränderung bzw. -steigerung (vgl. FIG 2, Leistungsrampe 53) des Verdichters 51 bzw. Verdichterstrangs 1 erforderliche - Drehzahländerung 130 im Verdichterstrang 1 durch entsprechende Ansteuerung des den Verdichterstrang 1 antreibenden Elektromotors 2 mittels des elektronischen Frequenzumrichters 3.

Durch eine zweimalige Umwandlung eines elektrischen Stroms von einem Wechselstrom auf einer Netzseite 13, zu einem Gleichstrom innerhalb des Umrichters 3 und schließlich zu einem Wechselstrom auf Seite 14 des Elektromotors 2 werden zusätzlich zu einer Speisefrequenz des Elektromotors 2 auch torsionsanregende Frequenzanteile generiert.

Diese anregende Frequenzanteile, überwiegend harmonische und interharmonische Anregungen, können Torsionsresonanzen 12 im Verdichterstrang 1, d.h. in Bauteilen 4, 5 und/oder Komponenten 4, 5 des mechanischen Antriebssystems bzw. im Verdichterstrang 1, verursachen.

Diese Torsionsresonanzen 12 führen zu Schwingungen und Belastungen in den Bauteilen 4, 5 bzw. Komponenten 4, 5 des Verdichterstrangs 1 und können zu Bauteilversagen im Verdichterstrang 1 führen.

Um einen sicheren Betrieb des Verdichterstrangs 1, d.h. einen stationären Betrieb (Dauerbetrieb) außerhalb der Torsionsresonanzen 12, zu gewährleisten, sieht die Anlage 50 eine messtechnische Überwachung der dynamischen Torsionsbelastung 7 im Verdichterstrang 1 vor.

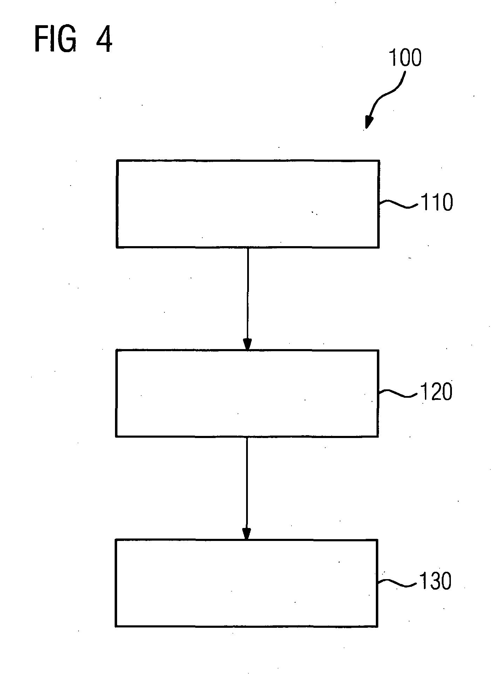

Dazu sind, wie FIG 1 verdeutlicht, an einer - eine Abtriebswelle 4 des Elektromotors 2 mit einer Antriebswelle 4 des Verdichters 51 mechanisch koppelbare - Kupplung 5 im Verdichterstrang 1 Dehnmessstreifen 15 aufgebracht, welche das an der Kupplung 5 wirkende dynamische Torsionsmoment 7 während des Betriebs der Verdichteranlage 50 messen (FIG 4, 100, 110).

Eine Steuerung 220 - in einer Leittechnik 54 - der Verdichteranlage 50 erhält zusätzlich zu anderen dort vorliegenden Betriebsparametern der Verdichteranlage 50, wie die aktuelle Drehzahl 6 im Verdichterstrang 1, Nenndrehzahl und Nenndrehmoment 16 des Verdichterstrangs 1, die gemessenen Torsionsmomente 7 übermittelt.

Über die Steuerung 220 in der Leittechnik 54 der Verdichteranlage 50 wird die Verdichteranlage 50 im Betrieb gefahren (vgl. FIG 3 Verdichter- bzw. Drehzahlkennfeld 52).

FIG 2 verdeutlicht in einem Diagramm (Abszisse: Zeit in Zeitpunktangabe bzw. in [min] 17/Ordinate: Drehzahl 6 [U/min] bzw. Torsionsmoment 8 [kNm]) die Betriebszustände BZ und Belastungen (dynamische Torsionsbelastung 7) des Verdichterstrangs 1 bei Durchfahren einer Leistungsrampe (Drehzahlrampe) 53.

Kurve A (Drehzahlkurve) 18 zeigt dabei im Zeitverlauf 17 - über eine Zeitdauer von ca. 16 min - die bei Durchfahren der Leistungsrampe (Drehzahlrampe) 52 gefahrenen Drehzahlen 6 bzw. die gefahrene Drehzahländerung 130 bzw. Drehzahlerhöhung 130 im Verdichterstrang 1.

Ausgehend von einem ersten Betriebszustand BZ1 zu einem ersten Zeitpunkt t1, in dem der Verdichterstrang 1 mit einer ersten Drehzahl DZ1 von ca. 7300 U/min gefahren wird, wird die Drehzahl 6 im Verdichterstrang 1 kontinuierlich - über eine Zeitspanne von ca. 12 min - auf eine zweite Drehzahl DZ2 von ca. 9300 U/min (Betriebszustand BZ2 zu einem zweiten Zeitpunkt t2) hochgefahren 130.

Kurve B (Torsionsbelastungskurve 7 mit Nennmomentenkurve 16) 19 verdeutlicht die bei dem Durchfahren dieser Leistungsrampe 53 an der Kupplung 5 im Verdichterstrang 1 gemessenen dynamischen Torsionsmomente (dynamische Torsionsbelastung) 7, 8.

Bei einem - annähernd zu der Drehzahlkurve A 18 parallelen - Kurvenverlauf von Kurve B 19 erhöht sich, wie FIG 2 zeigt, das im ersten Betriebszustand BZ1 gemessene Torsionsmoment 8 von ca. 54 kNm ebenfalls, bis es im zweiten Betriebszustand BZ2 das Torsionsmoment 8 in Höhe von ca. 90 kNm erreicht.

Die Drehzahlerhöhung 130 erfolgt dabei durch den Umrichter 3, welcher -. zusätzlich zu der entsprechend hochzufahrenden Speisefrequenz des Elektromotors 2 - auch torsionsanregende Frequenzanteile generiert.

Diese torsionsanregenden Frequenzanteile übertragen sich über den Elektromotor 2 auf den Verdichterstrang 1 und führen dort, wie die Torsionsmomentenmessung bzw. Kurve B 19 zeigt (FIG 2, Kurve B 19), zu oszillierenden Schwankungen 20 beim Torsionsmoment 8 bzw. um das jeweilige Nennmoment 16.

Erfüllen diese auf den Verdichterstrang 1 zusätzlich übertragenen Frequenzanteile Resonanzbedingungen im Verdichterstrang 1, so treten - bei den entsprechenden Drehzahlen 21 (Resonanzdrehzahlen 21) - Resonanzzustände 12 im Verdichterstrang lauf.

Diese Resonanzzustände 12 sind gekennzeichnet durch sprunghafte Anstiege 22 bzw. sprunghaftes Absinken 22 der gemessenen dynamischen Torsionsmomente 8 bzw. von deren Amplituden bei bzw. im Bereich der Resonanzdrehzahlen 21.

Da die Torsionsresonanzen 12 üblicherweise schwach gedämpft sind, nehmen, wie FIG 2 auch zeigt, die sprunghaften Änderungen 22 im Torsionsmoment 8 (Schwankungsbreiten) schon bei geringem Verlassen der jeweiligen Resonanzdrehzahl 21 ebenso schlagartig wieder ab.

FIG 2 verdeutlicht vier verschiedene Resonanzzustände, RZ1, RZ2, RZ3 und RZ4, die bei Durchfahren der Leistungsrampe 53 durchlaufen werden und dort zu erhöhten Belastungen im Verdichterstrang 1 führen.

Um die dynamische Torsionsbelastung 7 im Verdichterstrang 1 zu überwachen, wird, wie FIG 2 zeigt, um die Nennmomente 16 ein - in diesem Fall symmetrisch bezüglich der Nennmomente 16 ausgebildetes - (Überwachungs-)Band 23 gelegt.

Dieses Band 23, welches die - für einen sicheren Betrieb der Verdichteranlage 50 - zulässigen dynamischen Schwankungen 24 im Nennmoment 16 festlegt, wird durch eine obere Grenzlinie 25, gebildet durch einen ca. 12% Aufschlag auf das jeweilige Nennmoment 16, sowie durch eine untere Grenzlinie 26, gebildet durch einen entsprechenden 12% Abschlag auf das jeweilige Nennmoment 16, festgelegt.

Durch Vergleich (FIG 4 100, 120) der gemessenen dynamischen Torsionsmomente mit den Grenzen bzw. Grenzlinien 25, 26 dieses Bandes 23 lassen sich, wie FIG 2 verdeutlicht, vier regelungstechnisch zu vermeidende Dauerbetriebsdrehzahlbereiche DBB1, DBB2, DBB3, DBB4 bzw. 27, 28, 29, 30 identifizieren (FIG 4, 100, 120).

Diese vier regelungstechnisch zu vermeidende Dauerbetriebsdrehzahlbereiche DBB1, DBB2, DBB3, DBB4 bzw. 27, 28, 29, 30 ergeben sich jeweils dort, wo - jeweils im Bereich der jeweiligen Resonanzdrehzahl 21 - die gemessenen dynamischen Torsionsmomente außerhalb des Bandes 23 liegen.

Die so identifizierbaren Drehzahlbereiche DBB1, DBB2, DBB3, DBB4 bzw. 27, 28, 29, 30 können dann bei der Steuerung 220 der Verdichteranlage 50 als Dauerbetriebspunkte vermieden werden.

FIG 3 zeigt den Einfluss dieser Überwachung der dynamischen Torsionsbelastung 7 im Verdichterstrang 1 - und Vermeidung des Dauerbetriebs der Verdichteranlage 50 in den frequenzumrichtererregten Torsionsresonanzen 12 bzw. identifizierten Torsionsresonanzbereichen TB1, TB2, TB3, TB4 bzw. 30, 31, 32, 33 - auf das Verdichterkennfeld 52 der Verdichteranlage 50.

Wie FIG 3 zeigt sind im Verdichterkennfeld 52 (Abszisse: (relativer) Durchsatz 35/Ordinate: (relativer) Ausströmdruck 36) vier Drehzahlbänder DB1, DB2, DB3, DB4 37, 38, 39, 40 gekennzeichnet, welche den vier identifizierten Torsionsresonanzbereichen TB1, TB2, TB3, TB4 bzw. 31, 32, 33, 34 bzw. den vier regelungstechnisch zu vermeidenden Dauerbetriebsdrehzahlbereichen DBB1, DBB2, DBB3, DBB4 bzw. 27, 28, 29, 30 entsprechen und welche für einen stationären Betrieb des Verdichters 51 gesperrt sind.

Betriebszustände BZ, welche nach der Steuerung 220 der Anlage 50 innerhalb eines solchen gesperrten Drehzahlbandes DB1, DB2, DB3, DB4 bzw. 37, 38, 39, 40 liegen, werden durch Drehzahlerhöhung 130 aus dem gesperrten Drehzahlband DB1, DB2, DB3, DB4 37, 38, 39, 40 herausgefahren (FIG 4, 100, 130) bzw. vermieden.

FIG 3 verdeutlicht dies anhand eines in dem zweiten gesperrten Drehzahlband DB2 38 liegenden Betriebspunkt X der Verdichteranlage 50.

An diesem Betriebspunkt X tritt im Verdichterstrang eine Torsionsresonanz (zweiter identifizierter Torsionsresonanzbereich TB2 32) auf, was eine hohe mechanische (Bauteil- )Belastung darstellt und zu Bauteilschäden im Verdichterstrang führen kann.

Durch - mittels des Umrichters 3 bewirkte - Drehzahlerhöhung 130 wird, wie Pfeil Z in FIG 3 verdeutlicht, der Betriebspunkt X aus dem gesperrten zweiten Drehzahlband 38 herausverschoben (FIG 4, 100, 130) - und die Verdichteranlage 50 in einen zulässigen, außerhalb der Resonanzbedingung liegenden Betriebszustand BZ, Betriebspunkt Y, für einen Dauerbetrieb gefahren.

Damit vermeidet die Steuerung 220 den stationären Betrieb der Verdichteranlage 50 in dieser frequenzumrichtererregten Torsionsresonanz 12 bzw. in dem zweiten identifizierten Torsionsresonanzbereich TB2 32 und beugt Bauteilversagen vor.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen, wie er durch die beigefügten Patentanspüche festegelegt wird.

## Patentansprüche

1. Verfahren (100) zur Steuerung einer Drehzahl (6) eines unter Verwendung einer Antriebseinheit (2) mit veränderlicher Drehzahl (6) antreibbaren Verdichterstrangs (1), bei dem
- ein eine dynamische Torsionsbelastung (7) im Verdichterstrang (1) beschreibender Belastungswert (8) bei einer aktuellen Drehzahl (6) des durch die Antriebseinheit (2) angetriebenen Verdichterstrangs (1) ermittelt wird (110), indem ein dynamisches Torsionsmoment im Verdichterstrang (1) oder eine dynamische relative Wellenschwingung im Verdichterstrang (1) bei der aktuellen Drehzahl (6) ermittelt wird,
**dadurch gekennzeichnet, dass**
- der Belastungswert (8) mit einem vorgegebenen Grenzwert (9, 10, 11) verglichen wird (120) und,
- wenn der Belastungswert (8) bezüglich des vorgegebenen Grenzwertes (9, 10, 11) eine vorgegebene Bedingung erfüllt, die aktuelle Drehzahl (6) im Verdichterstrang (1) unter Verwendung der Antriebseinheit (2) verändert wird (130).

2. Verfahren (100) nach Anspruch 1,
bei dem, wenn der Belastungswert (8) bezüglich des vorgegebenen Grenzwertes (9, 10, 11) eine vorgegebene Bedingung erfüllt, die aktuelle Drehzahl (6) im Verdichterstrangs (1) erhöht wird (130).

3. Verfahren (100) nach mindestens einem der voranstehenden Ansprüche,
bei dem der vorgegebene Grenzwert (9, 10, 11) ein oberer Grenzwert (10) und die vorgegebene Bedingung ein Erreichen oder Überschreiten des oberen Grenzwertes (10) ist und/oder der vorgegebene Grenzwert (9, 10, 11) ein unterer Grenzwert (11) und die vorgegebene Bedingung ein Erreichen oder Unterschreiten des unteren Grenzwertes (11) ist.

4. Verfahren (100) nach mindestens einem der voranstehenden Ansprüche,
bei dem der Grenzwert (9, 10, 11) unter Verwendung eines maximalen, dynamisch übertragbaren Drehmoments ermittelt wird.

5. Verfahren (100) nach mindestens einem der voranstehenden Ansprüche,
durchgeführt jeweils für eine Mehrzahl aufeinander folgender Zeitpunkte.

6. Verfahren (100) nach mindestens einem der voranstehenden Ansprüche,
bei dem die Drehzahl (6) unter Verwendung eines frequenzumrichtergeführten Elektromotors (2) verändert wird, wobei der Elektromotor (2) unter Verwendung des Frequenzumrichters (3) zur Veränderung (130) der Drehzahl (6) gesteuert wird.

7. Verfahren (100) nach mindestens einem der voranstehenden Ansprüche,
eingesetzt zu einer Überwachung von Betriebszuständen (BZ) des Verdichterstrangs (1), insbesondere zu einer Vermeidung eines Dauerbetriebszustands des Verdichterstrangs (1) in einer Torsionsresonanz (12) des Verdichterstrangs (1), insbesondere in einer frequenzumrichtererregten Torsionsresonanz (12) des Verdichterstrangs.

8. Verfahren (100) nach mindestens einem der voranstehenden Ansprüche
eingesetzt zur Steuerung eines Turboverdichters (51), insbesondere eines Ein-Wellen-Turboverdichters oder eines Getriebeturboverdichters, mit dem Verdichterstrang (1).

9. Anordnung (200) zur Steuerung einer Drehzahl (6) eines unter Verwendung einer Antriebseinheit (2) mit veränderlicher Drehzahl (6) antreibbaren Verdichterstrangs (1)
- mit einer Ermittlungseinrichtung (210) eingerichtet derart, dass
- ein eine dynamische Torsionsbelastung (7) im Verdichterstrang (1) beschreibender Belastungswert (8) bei einer aktuellen Drehzahl (6) des durch die Antriebseinheit (2) angetriebenen Verdichterstrangs (1) ermittelbar ist (110), indem ein dynamisches Torsionsmoment im Verdichterstrang (1) oder eine dynamische relative Wellenschwingung im Verdichterstrang (1) bei der aktuellen Drehzahl (6) ermittelbar ist,
**gekennzeichnet dadurch, dass** die Anordnung umfasst:
- eine Steuerungseinheit (220) eingerichtet derart, dass
- der Belastungswert (8) mit einem vorgegebenen Grenzwert (9, 10, 11) vergleichbar ist (120) und
- wenn der Belastungswert (8) bezüglich des vorgegebenen Grenzwertes (9, 10, 11) eine vorgegebene Bedingung erfüllt, die Antriebseinheit (2) zu einer Änderung (130) der aktuellen Drehzahl (6) im Verdichterstrang (1) ansteuerbar ist.

10. Anordnung (200) nach Anspruch 9,
bei dem die Ermittlungseinrichtung (210) eine Meßeinrichtung (211) auf Basis einer Dehnungsmessstreifentechnologie (DMS-Technologie) und/oder die Steuerungseinheit (220) in einem Frequenzumrichter (3) implementiert ist.

11. Verdichterstrang (1) mit einer den Verdichterstrang (1) mit veränderlicher Drehzahl (6) antreibbaren, frequenzumrichtergeführten Antriebseinheit (2), einem die Antriebseinheit (2) führenden Frequenzumrichter (3) sowie mit einer Anordnung (200) nach Anspruch 9 oder Anspruch 10.

12. Verdichterstrang (1) nach Anspruch 11
mit einem frequenzumrichtergeführten Elektromotor (2) als die den Verdichterstrang (1) mit veränderlicher Drehzahl antreibbare, frequenzumrichtergeführte Antriebseinheit (2).

13. Verdichterstrang nach Anspruch 11 oder 12
mit einer Welle (4) oder Kupplung (5) im Verdichterstrang (1), an welcher die Ermittlungseinheit (210) zur der Ermittlung des Belastungswertes (8) angeordnet ist.

14. Verdichterstrang (1) nach mindestens einem der Ansprüche 11 bis 13,
eingesetzt bei einer großtechnischen Anlage (50), insbesondere bei einer chemischen oder petrochemischen Anlage (50), wie einer Anlage (50) zu einer Luftzerlegung oder einer Anlage (50) zu einer (Erdgas-)Verflüssigung.

## Claims

1. Method (100) for controlling a rotational speed (6) of a compressor train (1) which can be driven at a variable rotational speed (6) using a drive unit (2), in which method
- a load value (8) which describes a dynamic torsion load (7) in the compressor train (1) is detected (110) at a current rotational speed (6) of the compressor train (1) which is driven by the drive unit (2), in that a dynamic torsion torque is detected in the compressor train (1), or a dynamic relative shaft oscillation is detected in the compressor train (1) at the current rotational speed (6),
**characterized in that**
- the load value (8) is compared (120) with a predefined limiting value (9, 10, 11), and
- if the load value (8) satisfies a predefined condition with respect to the predefined limiting value (9, 10, 11), the current rotational speed (6) in the compressor train (1) is changed (130) using the drive unit (2).

2. Method (100) according to Claim 1,
in which, if the load value (8) satisfies a predefined condition with respect to the predefined limiting value (9, 10, 11), the current rotational speed (6) in the compressor train (1) is increased (130).

3. Method (100) according to at least one of the preceding claims,
in which the predefined limiting value (9, 10, 11) is an upper limiting value (10), and the predefined condition is the upper limiting value (10) being reached or exceeded, and/or the predefined limiting value (9, 10, 11) is a lower limiting value (11), and the predefined condition is the lower limiting value (11) being reached or undershot.

4. Method (100) according to at least one of the preceding claims,
in which the limiting value (9, 10, 11) is detected using a maximum, dynamically transmissible torque.

5. Method (100) according to at least one of the preceding claims,
carried out in each case for a plurality of successive times.

6. Method (100) according to at least one of the preceding claims,
in which the rotational speed (6) is changed using a frequency-converter-controlled electric motor (2), wherein the electric motor (2) is controlled using the frequency converter (3) for changing (130) the rotational speed (6).

7. Method (100) according to at least one of the preceding claims,
used to monitor operating states (BZ) of the compressor train (1), in particular to avoid a continuous operating state of the compressor train (1) in a torsion resonance (12) of the compressor train (1), in particular in a frequency-converter-excited torsion resonance (12) of the compressor train.

8. Method (100) according to at least one of the preceding claims,
used to control a turbocompressor (51), in particular a single-shaft turbocompressor or a transmission turbocompressor, with the compressor train (1).

9. Arrangement (200) for controlling a rotational speed (6) of a compressor train (1) which can be driven at a variable rotational speed (6) using a drive unit (2),
- having a detection device (210) configured such that
- a load value (8) which describes a dynamic torsion load (7) in the compressor train (1) can be detected (110) at a current rotational speed (6) of the compressor train (1) which is driven by the drive unit (2), in that a dynamic torsion torque can be detected in the compressor train (1), or a dynamic relative shaft oscillation can be detected in the compressor train (1) at the current rotational speed (6),
**characterized in that** the arrangement comprises:
- a control unit (220) configured such that
- the load value (8) can be compared with a predefined limiting value (9, 10, 11), and
- if the load value (8) satisfies a predefined condition with respect to the predefined limiting value (9, 10, 11), the drive unit (2) can be actuated to change (130) the current rotational speed (6) in the compressor train (1).

10. Arrangement (200) according to Claim 9,
in which the detection device (210) is a measuring device (211) based on a strain gauge technology and/or the control unit (220) is implemented in a frequency converter (3).

11. Compressor train (1) having a frequency-converter-controlled drive unit (2) which can drive the compressor train (1) at a variable rotational speed (6), a frequency converter (3) which controls the drive unit (2), and having an arrangement (200) according to Claim 9 or Claim 10.

12. Compressor train (1) according to Claim 11,
having a frequency-converter-controlled electric motor (2) as the frequency-converter-controlled drive unit (2) which can drive the compressor train (1) at a variable rotational speed.

13. Compressor train according to Claim 11 or 12,
having a shaft (4) or clutch (5) in the compressor train (1), to which shaft (4) or clutch (5) the detection unit (210) for detecting the load value (8) is arranged.

14. Compressor train (1) according to at least one of Claims 11 to 13,
used in a large-scale technical installation (50), in particular in a chemical or petrochemical installation (50), such as an installation (50) for air fractionation or an installation (50) for (natural gas) liquefaction.

## Revendications

1. Procédé (100) de commande d'une vitesse (6) de rotation d'une ligne (1) de compresseur pouvant être entraîné à une vitesse (6) de rotation variable en utilisant un groupe d'entraînement, dans lequel :
- on détermine (110), pour une vitesse (6) de rotation présente de la ligne (1) de compresseur entraîné par le groupe (2) d'entraînement, une valeur (8) de charge décrivant une charge (7) de torsion dynamique dans la ligne (1) de compresseur en déterminant, à la vitesse (6) de rotation présente, un couple de torsion dynamique dans la ligne (1) de compresseur ou une oscillation d'arbre dynamique relative dans la ligne (1) de compresseur,
**caractérisé en ce que**
- on compare la valeur (8) de charge à une valeur (9, 10, 11) limite donnée à l'avance et
- si la valeur (8) de charge satisfait une condition donnée à l'avance par rapport à la valeur (9, 10, 11) limite donnée à l'avance, on modifie (130) la vitesse (6) de rotation présente dans la ligne (1) de compresseur en utilisant le groupe (2) d'entraînement.

2. Procédé (100) suivant la revendication 1,
dans lequel, si la valeur (8) de charge satisfait une condition donnée à l'avance par rapport à la valeur (9, 10, 11) limite donnée à l'avance, on augmente (130) la vitesse (6) de rotation présente dans la ligne (1) de compresseur.

3. Procédé (100) suivant au moins l'une des revendications précédentes,
dans lequel, la valeur (9, 10, 11) limite donnée à l'avance est une valeur (10) limite supérieure et la condition donnée à l'avance est l'atteinte ou le dépassement de la valeur (10) limite supérieure et/ou la valeur (9, 10, 11) limite donnée à l'avance est une valeur (11) limite inférieure et la condition donnée à l'avance consiste dans le fait que l'on atteint ou que l'on passe en dessous de la valeur (11) limite inférieure.

4. Procédé (100) suivant au moins l'une des revendications précédentes,
dans lequel on détermine la valeur (9, 10, 11) limite en utilisant un couple de rotation maximum pouvant être transmis dynamiquement.

5. Procédé (100) suivant au moins l'une des revendications précédentes,
effectué respectivement pendant une pluralité d'instants se succédant.

6. Procédé (100) suivant au moins l'une des revendications précédentes,
dans lequel on modifie la vitesse (6) de rotation en utilisant un moteur (2) électrique piloté par un convertisseur de fréquence, le moteur (2) électrique étant, pour modifier (130) la vitesse (6) de rotation, commandé en utilisant le convertisseur (3) de fréquence.

7. Procédé (100) suivant au moins l'une des revendications précédentes,
utilisé pour un contrôle d'états (BZ) de fonctionnement de la ligne (1) de compresseur, notamment pour empêcher un état de fonctionnement permanent de la ligne (1) de compresseur à une résonance (12) de torsion de la ligne (1) de compresseur, notamment à une résonance (12) de torsion de la ligne de compresseur excitée par le convertisseur de fréquence.

8. Procédé (100) suivant au moins l'une des revendications précédentes,
utilisé pour commander un turbocompresseur (51), notamment un turbocompresseur à un seul arbre ou un turbocompresseur à engrenage, ayant la ligne (1) de compresseur.

9. Agencement (200) de commande d'une vitesse (6) de rotation d'une ligne (1) de compresseur pouvant être entraînée à une vitesse (6) de rotation variable en utilisant un groupe (2) d'entraînement
- comprenant un dispositif (210) de détermination conçu de manière à ce que
- puisse être déterminée à la vitesse (6) de rotation présente une valeur (8) de charge décrivant une charge (7) de torsion dynamique dans la ligne (1) de compresseur, en déterminant à la vitesse (6) de rotation présente un couple de torsion dynamique dans la ligne (1) de compresseur ou une oscillation d'arbre dynamique relative dans la ligne (1) de compresseur,
**caractérisé en ce que** l'agencement comprend :
- une unité (220) de commande conçue de manière à ce que
- la valeur (8) de charge puisse être comparée (120) à une valeur (9, 10, 11) limite donnée à l'avance et
- si la valeur (8) de charge satisfait une condition donnée à l'avance par rapport à la valeur (9, 10, 11) limite donnée à l'avance, le groupe (2) d'entraînement puisse être commandé pour une modification (130) de la vitesse (6) de rotation présente dans la ligne (1) de compresseur.

10. Agencement (200) suivant la revendication 9,
dans lequel le dispositif (210) de détermination comprend un dispositif (211) de mesure à base d'une technologie de jauge de contrainte (technologie d'extensométrie) et/ou l'unité (220) de commande est mise en oeuvre dans un convertisseur (3) de fréquence.

11. Ligne (1) de compresseur comprenant un groupe (2) d'entraînement pouvant être entraîné à une vitesse (6) de rotation variable et piloté par un convertisseur de fréquence, un convertisseur (3) de fréquence pilotant le groupe (2) d'entraînement, ainsi qu'un agencement (200) suivant la revendication 9 ou la revendication 10.

12. Ligne (1) de compresseur suivant la revendication 11 comprenant un moteur (2) électrique piloté par le convertisseur de fréquence comme groupe (2) d'entraînement piloté par un convertisseur de fréquence et pouvant entraîner la ligne (1) de compresseur à une vitesse de rotation variable.

13. Ligne (1) de compresseur suivant la revendication 11 ou 12
comprenant un arbre (4) ou un accouplement (5) dans la ligne (1) de compresseur, où l'unité (210) de détermination est disposée pour déterminer la valeur (8) de charge.

14. Ligne (1) de compresseur suivant l'une des revendications 11 à 13,
utilisée dans une grande installation (50), notamment dans une installation chimique ou pétrochimique, comme une installation (50) de fractionnement de l'air ou comme une installation (50) de liquéfaction du gaz naturel.
